Europäisches Patentamt

**European Patent Office**

**Office européen des brevets**

(11) Numéro de publication: **0 415 501 A1**

## (12) DEMANDE DE BREVET EUROPEEN

(21) Numéro de dépôt: **90202301.9**

(22) Date de dépôt: **28.08.90**

(30) Priorité: **30.08.89 CH 3140/89**

(43) Date de publication de la demande:
**06.03.91 Bulletin 91/10**

(84) Etats contractants désignés:
**AT CH DE FR GB IT LI NL**

(51) Int. Cl.⁵: **B23H 7/08**

(71) Demandeur: **CHARMILLES TECHNOLOGIES S.A.**
**8-10, rue du Pré-de-la-Fontaine Zone industrielle de Satigny**
**CH-1217 Meyrin 1(CH)**

(72) Inventeur: **Briffod, Jean-Paul**
**Les Carelines chez Degradaz**
**F-74380 Lucinges(FR)**

(74) Mandataire: **Hugelin, Christiane**
**c/o CHARMILLES TECHNOLOGIES SA Case postale 373**
**CH-1217 Meyrin 1(CH)**

(54) **Fil-électrode multicouches.**

(57) Fil composé d'une âme métallique bonne conductrice de l'électricité et possédant de bonnes propriétés mécaniques, recouverte d'une superposition de nombreuses couches fines contenant un métal à bas point de fusion et de vaporisation, comme le zinc, séparées par un métal bon conducteur, comme le cuivre. Ces deux métaux interdiffusent dans les couches voisines lors de l'utilisation du fil comme électrode outil dans une machine d'électroérosion à fil.

EP 0 415 501 A1

## FIL-ELECTRODE MULTICOUCHES

L'invention a pour objet la composition et la fabrication d'une électrode-fil pour le découpage EDM, avec une âme bonne conductrice de l'électricité et présentant de bonnes propriétés mécaniques, thermiques et électriques, en particulier une bonne résistance à la rupture ainsi qu'une bonne conductivité, cette âme étant revêtue d'un film contenant un métal à bas point de fusion et de vaporisation jouant le rôle de bouclier thermique.

Rappelons que la découpe EDM est réalisée avec un fil-électrode défilant en continu grâce à des moyens d'entraînement de type connu depuis une station d'alimentation jusqu'à une station de reprise. On dispose habituellement sur le trajet du fil, de part et d'autre de la pièce électriquement conductrice à usiner, deux guides qui vont le faire défiler à travers la pièce en le positionnant avec précision relativement à celle-ci. On appelera par la suite "zone d'usinage" l'espace compris entre ces deux guides. La machine d'électroérosion comporte aussi une source de courant qui fait passer une succession d'impulsions électriques entre le fil-électrode et la pièce, le long de cette zone d'usinage, pour enlever par électroérosion de la matière sur la pièce. Cette zone est balayée par un liquide d'usinage, par exemple de l'eau ou une solution aqueuse. Au fur et à mesure de l'enlèvement de matière, la pièce est déplacée dans un plan perpendiculaire ou oblique par rapport à l'axe du fil-électrode, selon un trajet prédéterminé, ce mouvement relatif étant commandé numériquement de façon à engendrer dans la pièce une découpe prédéterminée.

On sait que le rendement et la vitesse d'usinage obtenus lors d'une découpe EDM avec un fil-électrode dépendent de la densité de courant que peut conduire ce fil, et de sa résistance à la rupture lorsqu'il est soumis simultanément à une traction et à un échauffement. En effet, une découpe précise ne peut être obtenue que si le fil est bien tendu entre les deux guides disposés de part et d'autre de la pièce à usiner. En effet, il suffit alors de repérer la position de ces guides pour connaître avec précision celle des bords de la fente découpée par le fil. De plus, en augmentant la traction du fil on diminue sa vibration ainsi que les défauts dans les angles, ces derniers étant principalement dus à la flèche du fil. Ce dernier doit donc résister à une traction relativement importante (en général réglée entre 1 et 4 kilos) tout en étant soumis à l'échauffement dû aux étincelles et à l'effet Joule. Comme les métaux bons conducteurs de l'électricité sont en général peu résistants mécaniquement, ceci explique la difficulté à fabriquer des fils-électrodes appropriés à l'usinage à grande vitesse.

De nombreux travaux ont été entrepris en vue d'obtenir un fil amélioré:

- le dispositif décrit dans le brevet CH 526.365 permet d'écrouir le fil avant son passage dans la zone d'usinage ce qui permet d'obtenir un fil bien rectiligne et d'augmenter sa résistance mécanique. Le cuivre utilisé au début a été remplacé par du laiton; puis on a essayé d'autres alliages à plus grande résistance mécanique à la traction;

- on a aussi cherché à utiliser un fil composé par exemple d'une âme en acier avec un revêtement de métal bon conducteur comme le cuivre, comme décrit dans le brevet CH 620.621;

- on a proposé dans les brevets CH 620.621 et CH 620.622 de protéger l'âme du fil par un dépôt réalisé avec un métal à bas point de fusion et de vaporisation jouant le rôle de bouclier thermique. Ce dépôt peut lui-même être recouvert par une pellicule semi-conductrice, réalisée par exemple avec un oxyde du métal à bas point de vaporisation et dont le rôle est d'éliminer les courts-circuits, comme proposé dans le brevet CH 633.739,

- ce dépot peut être réalisé en superposant plusieurs couches.

Ainsi, toujours selon ce brevet CH 633.739, on dépose sur une âme de cuivre ou d'alliage de cuivre, de molybdène, ou constituée par un noyau d'acier enrobé de cuivre ou d'alliage de cuivre, quatre couches de zinc de 2 u d'épaisseur par exemple, et on les recuit successivement sous atmosphère oxydante afin de former une pellicule d'oxyde de zinc à leur surface. Ces recuits provoquent une diffusion des atômes de Cu et de Zn , de sorte que le zinc pur disparait au profit d'un alliage Cu/Zn. On obtient ainsi une alternance de films d'alliage et d'oxyde de zinc;

- afin d'augmenter la vitesse d'usinage, le brevet EP 173 786 recommande d'écrouir le fil après le recuit oxydant afin d'améliorer ses propriétés;

- de même, les demandes japonaises publiées sous les numéros 60-104.616 et 61-76.215 proposent d'alterner des couches de zinc et de cuivre par exemple, puis soit de tréfiler en chauffant assezz et avec une réduction d'au moins 85% en surface afin que la diffusion soit suffisante, soit de tréfiler et de recuire en plusieurs étapes afin d'opérer cette diffusion.

Le but de la présente invention était d'améliorer la résistance mécanique des fils-électrodes connus, tout en conservant leurs avantages, par exemple l'effet de bouclier thermique, l'élimination des courts-circuits et la bonne mouillabilité décrits dans les brevets CH 620.622 et CH 633.739. Ceci a été réalisé grâce aux fils-électrodes constitués et fabriqués selon les revendications 1 et 10.

Il est bien connu que la structure et donc les propriétés des fils-électrodes connus, varient selon les traitements thermiques auxquels ils sont soumis lors de leur fabrication. Dans le cas de couches voisines de cuivre et de zinc par exemple, on observe soit une dissolution d'atômes de cuivre dans le zinc en fusion, soit une interdiffusion, les atomes de chacun de ces métaux diffusant dans la couche voisine. Ce phénomène a été bien décrit dans les brevets CH 633.739 et CH 646.083. Lors d'une interdiffusion les teneurs en métaux diffusant se modifient lorsqu'on se déplace de l'âme du fil vers sa surface. Ce profil de concentration varie en général de manière continue avec le rayon. Par exemple, dans le cas de fils stratifiés préparés à partir d'une couche de zinc déposée sur une couche de cuivre ou de laiton, on obtient des strates de diverses structures cristallines, correspondant aux différentes phases du laiton. Les alliages sont de plus en plus riches en zinc lorsqu'on va de l'âme à la surface. On obtient ainsi une succession de couches de propriétés variables le long du rayon du fil, puisque chaque phase du laiton présente des propriétés différentes. Le brevet CH 646.083 signalait déjà la possiblité d'utiliser l'interdiffusion entre diverses couches déposées dans un certain ordre, afin d'adapter le profil des concentrations aux propriétés que l'on désire avoir à chaque profondeur riche en zinc à la surface, riche en nickel dans les couches profondes.

Mais ces phénomènes sont difficilement contrôlables, car la structure cristalline et les propriétés mécaniques de l'alliage obtenu dépendent en particulier de la température à laquelle a été réalisée la diffusion et du pourcentage de cuivre et de zinc en présence. Il est donc difficile de prévoir les propriétés du fil obtenu. Dans l'exemple ci-dessus d'un fil préparé à partir de couches de cuivre et de zinc, le laiton $\gamma$ (environ 60-70% de zinc) est une phase extrêmement fragile, et provoque l'apparition de risques de rupture si sa couche dépasse quelques microns, tandis que les phases $\beta$ et surtout $\alpha$ ont des propriétés mécaniques satisfaisantes. Même si un contrôle était possible, il serait difficile d'établir un bon compromis, les phases $\alpha$ et $\beta$ contenant peu de zinc et présentant donc un effet de bouclier thermique plus faible que la phase $\gamma$. En essayant par exemple d'éviter la phase $\gamma$ et d'obtenir la plus forte proportion possible de laiton $\beta$ afin d'améliorer la résistance à la rupture, on ne peut réaliser l'un des buts recherchés : avoir une forte teneur en zinc à la surface afin de préserver l'effet de bouclier thermique et d'éviter la redéposition du cuivre, puisque le laiton $\beta$ correspond à une concentration en cuivre de 70 à 40%.

On ne pouvait donc avoir à la fois un fil ayant une forte teneur en zinc à la surface et résistant bien à la rupture.

Or, selon la présente invention, le cuivre et le zinc sont déposés alternativement en couches très fines , c'est-à-dire de l'ordre de 0,1 à 1 $\mu$. Les différentes phases de laiton obtenues après traitement thermique vont se succéder en couches très fines (de l'ordre de 0,1 à 0,5 ou 1 micron). Les couches de laiton $\gamma$ ne présentent alors plus l'inconvénient précité, car elles sont assez souples pour offrir une résistance mécanique satisfaisante et résister à la rupture. Par contre, elles conservent l'avantage d'être riches en zinc et de bien résister à l'usure due à l'électroérosion. Il n'est donc plus, ni nécessaire, ni même souhaitable d'éviter cette phase $\gamma$.

Ces couches très fines permettent aussi de diminuer le temps nécessaire à la diffusion . On peut ainsi mieux la contrôler, en particulier en choisissant des épaisseurs appropriées pour les couches de zinc et de cuivre.

Surtout, ceci permet de supprimer les traitements thermiques lors de la fabrication du fil-électrode, puisqu'il devient possible de réaliser la diffusion directement sur la machine EDM, lors de l'utilisation du fil-électrode.

On superpose, sur une âme conductrice et ayant de bonnes propriétés mécaniques, par toute méthode connue, des couches métalliques très fines en faisant alterner un métal bon conducteur et un métal dont les températures de fusion et de vaporisation sont inférieures à celle du métal bon conducteur ou un alliage de ce métal, ces deux métaux pouvant interdiffuser . Puis on écroui le fil ainsi obtenu jusqu'au diamètre final désiré. La diffusion est réalisée directement sur la machine d'électroérosion, par exemple lors du recuit auquel est soumis le fil-électrode avant son enfilage, ou au moment où il est échauffé en pénètrant dans la zone d'usinage.

Contrairement aux fils connus dans l'état de la technique, les fils-électrode selon la présente invention présentent plusieurs très fines couches en métal bon conducteur, séparées par d'autres très fines couches contenant un métal à bas point de fusion et de vaporisation, alors que les couches des fils-électrode connus sont en alliages de ces deux métaux , suite à une diffusion réciproque de chacun de ces métaux dans les couches voisines.
C'est pourquoi les fils-électrodes de la présente invention peuvent être assez riches en zinc à la surface pour présenterun bouclier thermique efficace, tout en ayant en profondeur une faible teneur en zinc et donc mieux résister à la rupture et conduire l'électricité et la chaleur. On réalise aiinsi un meilleur compromis entre les propriétés électriques, thermiques et mécaniques exigées par le découpage EDM à grande vitesse, qu'avec les fils-électrodes connus.

Selon l'une de leurs réalisations possibles, les fils de la présente invention peuvent présenter une concentration en zinc qui croît et décroît plusieurs fois lorsqu'on se déplace du centre du fil vers sa surface.

Dans ce qui précède, l'invention a été décrite en relation avec l'une de ses formes d'exécution préférée, qui fait appel à des dépôts successifs et alternés de cuivre et de zinc. Mais il peut être avantageux d'utiliser d'autres métaux, ou alliages ou compositions contenant des métaux.

Ainsi d'autres métaux à bas point de vaporisation que le zinc peuvent jouer le rôle de bouclier thermique : le cadmium, le plomb, l'antimoine, le bismuth ainsi que leurs alliages. Toutefois les résultats obtenus avec un dépôt de zinc sont très satisfaisants car le fait que ce métal s'érode facilement n'est plus un inconvénient, puisque d'autres couches riches en zinc sont mises à nu successivement au fur et à mesure que la surface du fil est consommée et que ces couches proches de la surface peuvent être constituées par un laiton résistant relativement bien à l'érosion (laiton $\gamma$ ou $\beta$).

En ce qui concerne les couches conductrices de l'électricité, on peut utiliser du cuivre, ou un alliage de cuivre ou du cuivre avec une certaine teneur en oxyde de cuivre ou une autre métal ou alliage ou composition contenant un autre métal que le cuivre qui diffuse dans les couches voisines contenant le métal à bas point de vaporisation, pour autant que ce métal à bas point de vaporisation diffuse aussi dans ces couches conductrices.

On peut aussi faire varier l'épaisseur et la composition des couches successives en allant de l'âme à la surface.

L'âme du fil peut être réalisée en tout métal, alliage ou composition métallique, cristalline ou amorphe, en particulier ceux ayant une bonne résistance à la traction et admettant une forte densité de courant. Citons par exemple le cuivre, le laiton, l'acier, éventuellement revêtu de cuivre, le tungstène, le molybdène, mais les matériaux envisageables ne sont aucunement limités à cette liste. Il peut s'agir de plusieurs couches de divers métaux ou alliages.

Selon l'une des variantes préférées, le fil est revêtu d'une pellicule semi-conductrice, de l'oxyde de zinc par exemple. Comme décrit dans le brevet CH 633.739, ceci permet d'éliminer quasi totalement les courts-circuits.

D'autres oxydes métalliques, tels que ceux cités dans le brevet mentionné ci-dessus, peuvent être utilisés ($CuO_2$, $Cu_2O$, $MgO$, $PbO$, $MnO_2$, $CdO$, $In_2O_3$, $TiO_2$ et $NiO$), ou bien des isolants devenant conducteurs en couches minces au-delà d'une certaine différence de potentiel, comme $Al_2O_3$. On peut aussi utiliser des matériaux non métalliques tels que des carbures, borures, siliciures, sulfures et nitrures de différents métaux.

Rappelons que, comme décrit dans le brevet CH 633.739, le ou les traitements thermiques réalisés sur les fils selon la présente invention lors de leur passage dans une machine EDM ont aussi pour effet l'apparition d'une structure spongieuse à leur surface, ce qui leur donne une bonne mouillabilité et favorise par conséquent leur refroidissement par le liquide d'usinage. Cette propriété permet, elle aussi, d'augmenter la vitesse d'usinage.

Selon certaines variantes, le fil peut être revêtu d'une pellicule facilitant le glissement du fil sur les dispositifs le faisant défiler dans la zone d'usinage et dans les guides-fil, ou encore d'une pellicule anticorrosion. Signalons que cette dernière est inutile lorsque le fil est déjà muni d'une pellicule d'oxyde, ce dernier jouant aussi le rôle d'anticorrosion.

Comme le film enrobant l'âme du fil est composé d'une superposition de très fines couches, dont une sur deux est en métal bon conducteur (comme le cuivre), les fils selon la présente invention présentent un autre avantage: une couche bonne conductrice est située très près de la surface du fil contrairement aux fils connus, où il faut traverser plusieurs microns avant d'arriver à une couche bonne conductrice ou bien où cette couche a été transformée par diffusion en alliage de zinc. De plus, elle n'est séparée que par une faible épaisseur de matière de la couche conductrice plus profonde, etc... Ceci améliore la qualité des contacts amenant au fil le courant d'usinage. Donc l'alimentation en courant d'usinage sera améliorée. De plus, la chaleur se transmet beaucoup plus facilement à travers ce fil qu'à travers les fils connus, le fil étant meilleur conducteur thermique, et l'échauffement par effet Joule sera réduit; le fil se refroidira plus vite, et pourra accepter une densité de courant plus importante ce qui permettra d'augmenter la vitesse d'usinage. En diminuant les diverses causes d'échauffements localisés, les fils présentent donc un moins grand risque de rupture que les fils connus.

Un autre avantage de la présente invention réside dans le mode de fabrication de nouveaux fils-électrodes: aucun traitement thermique n'est plus nécessaire, la chaleur dégagée par les étincelles de l'usinage EDM ou utilisée pour recuire le fil avant enfilage, étant suffisante pour provoquer la diffusion, alors qu'il était habituel dans le cas des fils stratifiés, de réaliser un traitement thermique après l'application de chaque strate. Ainsi, dans le cas des fils avec plusieurs couches de zinc et d'oxyde de zinc superposées, décrits dans CH 633.739, un recuit est effectué après l'application de chaque couche de zinc. De même, la demande de brevet japonaise publiée sous le numéro 61-76.215 préconise plusieurs tréfilages et recuits.

La vitesse de production des fils-électrodes de la présente invention est ainsi accrue , le fil défilant rapidement à travers les stations d'enduction et de formage à froid ou écrouissage ; il n'est plus soumis à aucun échauffement, recuit ou refroidissement. Les gains de temps, de place et de côut en installation et en énergie sont évidents.

**Revendications**

1. Electrode-fil pour le découpage par électroérosion, comportant une âme réalisée avec un matériau conducteur de l'électricité et possédant de bonnes propriétés mécaniques et revêtue d'un film composé par de nombreuses couches fines, les unes constituées par au moins un métal bon conducteur de l'électricité, séparées par des couches contenant un métal dont les températures de vaporisation et de fusion sont inférieures à celles du métal bon conducteur, ce métal à bas point de fusion et de vaporisation n'étant présent que dans une couche sur deux.

2. Electrode-fil selon la revendication 1, dans laquelle le métal à bas point de fusion et de vaporisation et le métal bon conducteur peuvent diffuser à chaud l'un dans l'autre en donnant des alliages de structure et de composition données.

3. Electrode-fil selon la revendication 2, dans laquelle au moins deux alliages de structures cristallines différentes sont présents dans une même couche.

4. Electrode-fil selon la revendication 1, dans laquelle l'âme est réalisée dans un alliage du métal bon conducteur et du métal à bas point de fusion et de vaporisation.

5. Electrode-fil selon la revendication 1, dont le film est constitué par des couches de cuivre et de zinc superposées alternativement.

6 . Electrode-fil selon la revendication 1, constituée par une âme de cuivre, de laiton, d'acier ou d'acier enrobé de cuivre, revêtue par une superposition de très fines couches constituées alternativement par du cuivre et du zinc ou un alliage de zinc.

7 . Electrode-fil selon la revendication 6, dans laquelle la couche externe est en zinc.

8 Electrode-fil selon la revendication 1, dans laquelle la couche externe est constituée par un semi-conducteur.

9 . Electrode-fil selon la revendication 8, dans laquelle cette couche externe est de l'oxyde de zinc.

10. Procédé de fabrication d'une électrode-fil selon la revendication 1, dans lequel on superpose sur une âme réalisée avec un matériau conducteur de l'électricité et possédant de bonnes propriétés mécaniques des couches fines alternées d'un métal à bas point de fusion et de vaporisation et d'un métal bon conducteur de l'électricité, en terminant par une couche de métal à bas point de fusion et de vaporisation, puis on soumet cette superposition à un écrouissage afin de former le fil à froid sans provoquer la diffusion de l'un de ces métaux dans un couche voisine.

11. Utilisation dans une machine EDM à fil d'une électrode-fil selon la revendication 1, dans laquelle ce fil est soumis à un traitement thermique réalisé sur cette machine avant ou au cours de l'usinage, de façon à obtenir par diffusion des strates d'alliages du métal à bas point de fusion et de vaporisation et du métal bon conducteur de l'électricité.

12. Utilisation selon la revendication 11, dans laquelle l'électrode-fil présente un film constitué de couches alternées de cuivre et de zinc ou d'alliage de zinc, d'épaisseur et de composition appropriées pour que la portion de fil pénètrant dans la fente à usiner présente une superposition de couches de laiton $\alpha$ et de laiton $\beta$, ce dernier contenant de 30 à 60% de zinc.

13. Utilisation selon la revendication 11, dans laquelle l'électrode-fil présente un film constitué de couches alternées de cuivre et de zinc ou d'alliage de zinc, d'épaisseur et de composition appropriées pour que la portion de fil pénètrant dans la fente à usiner présente des couches de laiton $\gamma$ d'épaisseur inférieure à 0,5 microns et à teneur en zinc supérieure à 60%.

14. Utilisation selon la revendication 11, dans laquelle l'électrode-fil présente un film constitué de couches alternées de cuivre et de zinc ou d'alliage de zinc, d'épaisseur et de composition appropriées pour que la portion de fil pénètrant dans la fente à usiner présente sur une épaisseur de plus de 8 microns des couches de laiton à plus de 60% de zinc alternant avec des couches de laiton dont la teneur en zinc est comprise entre 30 et 60%.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | PATENT ABSTRACTS OF JAPAN<br>vol. 8, no. 100 (M-295)(1537) 11 mai 1984,<br>& JP-A-59 14429 (SUMITOMO DENKI KOGYO) 25 janvier 1984,<br>* le document en entier *<br>----- | 1 | B23H7/08 |
| | | | **DOMAINES TECHNIQUES RECHERCHES (Int. Cl.5 )** |
| | | | B23H |

Le présent rapport a été établi pour toutes les revendications

| Lieu de la recherche | Date d'achèvement de la recherche | Examinateur |
|---|---|---|
| LA HAYE | 19 SEPTEMBRE 1990 | DAILLOUX C. |

EPO FORM 1503 03.82 (P0402)